(19) Europäisches Patentamt
European Patent Office
Office européen des brevets

(11) EP 0 685 499 B1

# (12) FASCICULE DE BREVET EUROPEEN

(45) Date de publication et mention de la délivrance du brevet:
**08.10.1997 Bulletin 1997/41**

(51) Int Cl.[6]: **C08F 214/18**, C08L 27/12

(21) Numéro de dépôt: **95401258.9**

(22) Date de dépôt: **31.05.1995**

(54) **Dispersion stable aqueuse de copolymères fluorés hydroxilés**

Stabile wässrige Dispersion mit Fluor- und Hydroxyl-enthaltenden Copolymeren

Stable aqueous dispersion of fluorinated hydroxylated copolymers

(84) Etats contractants désignés:
**AT BE CH DE DK ES FR GB GR IE IT LI LU NL PT SE**

(30) Priorité: **01.06.1994 FR 9406682**

(43) Date de publication de la demande:
**06.12.1995 Bulletin 1995/49**

(73) Titulaire: **ELF ATOCHEM S.A.
92800 Puteaux (FR)**

(72) Inventeurs:
- **Kappler, Patrick
F-69130 Ecully (FR)**
- **Perillon, Jean-Luc
F-27300 Bernay (FR)**
- **Savary, Catherine
F-27410 Ajou (FR)**

(56) Documents cités:
**EP-A- 0 396 444**
**EP-A- 0 433 106**
**EP-A- 0 481 849**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 685 499 B1

## Description

La présente invention a pour objet une dispersion stable aqueuse comprenant un ou plusieurs copolymères fluorés hydroxylés et éventuellement un ou plusieurs copolymères acryliques. Ces dispersions présentent l'avantage d'être stables au stockage, aptes à la mise en forme de films d'adhésion excellente sur des substrats divers, d'avoir de bonnes propriétés chimiques et une bonne résistance mécanique. Elles présentent l'avantage supplémentaire de posséder en général un taux d'extrait sec élevé, c'est-à-dire supérieur ou égal à 30 % en poids.

Ces dispersions peuvent être utilisées comme peintures ou revêtements applicables notamment selon un procédé d'électrodéposition, comme matériaux pour traiter les métaux, les fibres, pour fabriquer papier et carton, revêtements de sols, etc.

De telles dispersions aqueuses sont décrites dans EP 212.508 et EP 224.870 au nom de DAIKIN, EP 341.716 au nom de ASAHI GLASS et EP 508.229 au nom de CENTRAL GLASS ; toutes ces dispersions contiennent un alcool et une amine tertiaire, telle que la triéthylamine. La présence d'amine au sein d'une composition pour peinture présente l'inconvénient d'entraîner un jaunissement de la peinture lors du traitement thermique de filmification, voire même l'apparition de piqûres à la surface de ladite peinture.

EP 360.575 au nom de JSR.décrit des dispersions aqueuses exemptes de solvant et d'amine sous forme de latex de copolymère de fluorure de vinylidène préparés en émulsion et ensemencés par un copolymère acrylique de température de transition vitreuse faible ; le défaut principal de ces dispersions est leur manque de dureté, particulièrement préjudiciable pour des applications peinture.

Les polymères fluorés sont connus pour leur résistance chimique, notammment aux solvants, leur excellente tenue thermique, résistance aux intempéries et aux rayonnements, UV par exemple, leur imperméabilité aux gaz et aux liquides, leur qualité d'isolants électriques. Ils présentent néanmoins l'inconvénient d'être de mise en oeuvre plutôt difficile, notamment pour la filmification, avec des propriétés d'adhésion, de transparence, et de résistance au choc en général moins bonnes que d'autres polymères thermoplastiques tels que les polyamides. Les copolymères fluorés hydroxylés utilisables pour les dispersions aqueuses selon l'invention sont notamment décrits dans les demandes de brevet EP 396.445, EP 433.106 et EP 481.849 au nom de la demanderesse : ils sont à base des monomères suivants :

1. de 45 à 95 % (molaire) de fluorure de vinylidène (VF2) et/ou de trifluoroéthylène (VF3),
2. de 5 à 55 % (molaire) de tétrafluoroéthylène ($C_2F_4$)
3. de 2 à 25 moles pour 100 moles de monomères 1+2 d'un ou plusieurs monomères allyliques hydroxylés choisis parmi l'alcool allylique et les éthers allyliques hydroxylés tels que

$$CH_2=CH-CH_2-O-CH_2-CHOH-CH_2-OH$$

$$CH_2=CH-CH_2-O-CH_2-C(CH_2OH)_2(CH_2CH_3)$$

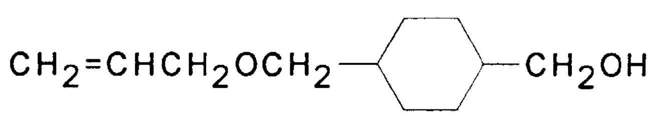

$$CH_2=CH-CH_2-O-(CH_2)_n-OH \text{ avec } 3 \leq n \leq 8$$

$$CH_2=CH-CH_2-O-(CH_2-CH_2-O)_n-H \text{ avec } 1 \leq n \leq 14$$

$$CH_2=CH-CH_2-O-(CH_2-CH(CH_3)-O)n-H \text{ avec } 1 \leq n \leq 14$$

4. et de 0 à 10 moles pour 100 moles de monomères 1+2 d'un ou plusieurs monomères choisis parmi les éthers vinyliques non hydroxylés, tels que le butylvinyléther, d'autres monomères fluorés (i-e différents de VF2, VF3, $C_2F_4$) tels que $C_3F_6$, $C_2F_3Cl$, les éthers et esters allyliques non salifiés, éventuellement carboxylés et/ou substitués par $-(CF_2)_n-CF_3$ avec $4 \leq n \leq 10$tels que :

$CH_2=CH-CH_2-O-CO-C_2H_4-COOH$, $CH_2=CH-CH_2-O-CO-C_6H_{10}-COOH$

$CH_2=CH-CH_2-O-C_2H_4-(CF_2)_nCF_3$

$CH_2=CH-CH_2-CO-O-C_2H_4-(CF_2)_nCF_3$, $CH_2=C(CH3)-CO-O-CH_2-CF_3$

Les dispersions aqueuses stables ont de préférence un taux d'extrait sec au moins égal à 30 % en poids.

Le ou les copolymères acryliques selon l'invention sont à base des monomères suivants :

* de 40 à 70 % (massique) de méthacrylate de méthyle (MAM),
* de 30 à 60 % (massique) d'un ou plusieurs (méth)acrylate(s) d'alkyle, tels que l'acrylate de butyle (ABu), les (méth) acrylates d'éthyle,
* et de 0 à 15 % (massique) d'un ou plusieurs monomères (méth)acrylates d'alkyle fonctionnalisés ou substitués par exemple par des groupements hydroxy, $CF_3-(CF_2)_n-$ avec $4 \leq n \leq 10$, tels que le (méth)acrylate d'hydroxyéthyle (HEA), le méthacrylate de 2,2,2-trifluoroéthyle (MATRIFE), $CH_2=CR-COO-C_2H_4-(CF_2)_n-CF_3$ avec R=H ou $CH_3$ (ACFn), les acides (méth)acryliques (AA et AMA), les sels de l'acide acrylamido2 méthylpropane sulfonique, notamment $CH_2=CH-CO-NH-C(CH_3)_2-CH_2-SO_3^- N^+(C_2H_5)_3$ (AMPS/TEA), le diméthylacrylamide (DMA), le diméthylamino éthyl méthacrylate $CH_2=C(CH_3)-COO-CH_2-CH_2-N-(CH_3)_2$ (MADAME).

En effet, la demanderesse a remarqué que la présence de certains des monomères ci-dessus au sein du ou des copolymères acryliques améliore certaines propriétés mécaniques, physiques et/ou chimiques de la dispersion selon l'invention. A titre d'exemple, les hydroxy (meth)acrylates améliorent les propriétés de réticulation, le MATRIFE et les (ACFn) ont des propriétés anti-graffiti, les acides acrylique et méthacrylique améliorent les propriétés d'adhérence, l'AMPS/TEA, le DMA ont des propriétés de stabilisation mécanique de la dispersion, le MADAME permet l'accès aux revêtements de substrats par cataphorèse.

Le rapport pondéral du ou des copolymères acryliques à l'ensemble de(s) copolymère(s) fluoré(s) hydroxylé(s) et de(s) copolymère(s) acrylique(s) dans la dispersion stable aqueuse est compris entre 0 et 50 %, et de préférence entre 20 et 30 %.

La stabilité de la dispersion est assurée par un ou plusieurs agents émulsifiants présents dans la dispersion. Par dispersion stable, on entend une dispersion qui est stable au cours du temps, c'est-à-dire qui peut être mise en oeuvre sans altération de ses propriétés après un stockage prolongé - de l'ordre de quelques mois. Le ou les agents émulsifiants peuvent être cationiques, non ioniques et de préférence anioniques. Les émulsifiants anioniques préférés comprennent des groupements $CF_3-(CF_2)_n-$ avec $4 \leq n \leq 10$. A titre d'exemple, on peut citer :

$C_nF_{(2n+1)}-C_2H_4-SO_3^- K^+$ $C_nF_{(2n+1)}-COO^-K^+$ $C_nF_{(2n+1)}-COO^-NH_4^+$

Les dispersions aqueuses stables contiennent en général de 0,25 à 3 % d'agent(s) émulsifiant(s).

L'invention a également pour objet les procédés de préparation de dispersions stables aqueuses de copolymères fluorés hydroxylés d'une part, et copolymères fluorés hydroxylés et de copolymères acryliques d'autre part.

La littérature enseigne différentes méthodes de préparation de dispersions stables aqueuses. On peut fixer des fonctions carboxyliques sur la chaîne de polymère fluoré hydroxylé, soit par copolymérisation directe soit de manière indirecte par réaction chimique des fonctions hydroxyles. Après salification des fonctions acides carboxyliques, on obtient des dispersions aqueuses, voir par exemple EP 212.508, EP 281.991, EP 320156 et EP 508.229. On peut aussi copolymériser des oléfines fluorées avec des macromères ayant des motifs dérivés d'oxyde d'éthylène ou de propylène comme décrit dans EP 341.716. La demanderesse a mis en oeuvre les procédés énoncés ci-dessus avec les copolymères fluorés selon l'invention et a constaté que l'on n'obtient pas des dispersions aqueuses satisfaisantes i-e stables et à extrait sec élevé, exemptes de coagulats.

Le procédé de préparation des dispersions stables aqueuses mis au point par la demanderesse consiste à :

* préparer une solution de copolymère(s) fluoré(s) hydroxylé(s) et éventuellement en présence du ou des copolymères acryliques dans un solvant organique,
* disperser la solution ainsi obtenue dans une solution aqueuse d'agent(s) émulsifiant(s),
* éliminer le solvant organique soit simultanément par distillation , soit après la dispersion.

La solution organique de copolymère(s) fluoré(s) hydroxylé(s) seul(s) peut en général être obtenue par copolymérisation de ces copolymères directement en solution dans le solvant organique, voir par exemple EP 396.445, EP 433.106 et EP 481.849 au nom de la demanderesse. Les copolymères fluorés peuvent être polymérisés en solution

notamment dans le tertiobutanol, l'acétate de méthyle ou l'acétate d'isopropyle. Après chargement du solvant organique dans le réacteur de polymérisation, on introduit le(s) monomère(s) allylique(s) hydroxylé(s) puis VF2 et $C_2F_4$. Après avoir porté la température entre 50 et 70 °C, on ajoute l'initiateur de polymérisation, de préférence choisi parmi le perdicarbonate d'isopropyle ou le perpivalate de tertiobutyle. En cours de polymérisation et afin de maintenir les proportions des divers monomères dans des rapports constants, on ajoute VF2, $C_2F_4$ et le(s) monomère(s) allylique(s) hydroxylé(s) en prenant soin de maintenir la pression constante. Lorsque tous les monomères ont été introduits, on abaisse la température et dégaze le réacteur en évacuant les monomères fluorés qui n'ont pas réagi. Si le solvant utilisé lors de la polymérisation des copolymères fluorés est un acétate, la solution organique de copolymère est apte à être transformée en dispersion aqueuse selon l'invention. Par contre, si le solvant utilisé est le tertiobutanol, il est nécesssaire de procéder à un transfert de solvant afin de dispose de copolymère fluoré dans le solvant souhaité.

Dans le cas des dispersions aqueuses comprenant également un ou plusieurs copolymères acryliques, on peut mélanger à la solution de copolymère(s) fluoré(s) hydroxylé(s) le ou les copolymères acryliques déjà synthétisés, ou bien copolymériser les monomères acryliques (i-e les monomères dont dérivent le ou les copolymères acryliques) directement dans le solvant organique en présence de copolymère(s) fluoré(s) hydroxylé(s). La copolymérisation des copolymères acryliques au sein de la solution de copolymère(s) fluoré(s) hydroxylé(s) peut être réalisée en ajoutant la totalité ou une fraction des monomères acryliques qui est introduite soit en continu soit par incréments successifs en cours de polymérisation. La température de polymérisation est en général comprise entre 40 et 90 °C. On peut utiliser des agents de transfert de type mercaptan pour réduire les masses moléculaires et des initiateurs radicalaires organosolubles en général choisi parmi les initiateurs de type azoïque, les peroxydicarbonates, les perpivalates et les peroxydes de diacyle. A titre d'exemple, on peut citer l'azobisisobutyronitrile, le perdicarbonate de cyclohexyle, le perpivalate de tertiobutyle.

Dans le cas des dispersions aqueuses comprenant également un ou plusieurs copolymères acryliques, une variante consiste à utiliser la technique de polymérisation en émulsion ensemencée, telle que décrite dans EP 320.126 et EP 360.575, qui consiste à polymériser en émulsion le mélange de monomères acryliques en présence de latex de copolymère(s) fluoré(s) hydroxylé(s) ou d'une dispersion artificielle de copolymère(s) fluoré(s) hydroxylé(s).

Les solvants organiques selon l'invention ont une température d'ébullition en général comprise entre 30 et 90 °C et une solubilité dans l'eau comprise en général entre 0,5 et 500 g/l (mesurée à 20°C conditions TPN). On peut citer les alcools, les esters, ces derniers étant particulièrement préférés par la demanderesse. A titre d'exemple de solvant préféré, on peut utiliser les acétates d'alkyle (méthyle, éthyle et isopropyle).

La concentration pondérale du ou des copolymères fluorés hydroxylés dans le solvant organique est en général comprise entre 15 et 40 %.

La dispersion des copolymères peut être mise en oeuvre à l'aide de disperseurs ou d'homogénéiseurs capables de dissiper beaucoup d'énergie mécanique dans les mélanges de liquides immiscibles. Ces appareils permettent de réaliser des émulsions de type "huile dans eau" grâce à l'ajout d'agent(s) émulsifiant(s) approprié(s), la phase "huile" étant ici la solution organique de copolymère(s) fluoré(s) hydroxylé(s). Le mélange solution aqueuse/solution de copolymères est soumis à un cisaillement intense par un système d'agitation mécanique ou bien par passage sous pression à travers des buses. En général, l'étape de dispersion peut être mise en oeuvre dans une gamme de température comprise entre 0 et 100 °C, et de préférence entre 15 et 50 °C.

Le rapport pondéral eau/solution de copolymère(s) est en général compris entre 0,2 et 1.

Après élimination du solvant organique, on obtient une dispersion aqueuse stable au stockage prolongé qui peut être utilisée plusieurs mois après sa fabrication sans diminution de ses qualités. On peut apprécier la stabilité mécanique au stockage de la dispersion aqueuse en effectuant d'une part un test de sédimentation, d'autre part en mesurant la taille des particules dispersées.

Le test de sédimentation consiste à laisser reposer la dispersion pendant un mois, puis à évaluer le dépôt éventuel formé après agitation sommaire suivie d'un repos de 24 heures. On calcule le rapport pondéral de copolymères déposés et séchés à la quantité totale des copolymères séchés présents.

La taille des particules est mesurée par analyse de la diffusion d'un faisceau monochromatique à travers un échantillon dilué de la dispersion.

L'invention a également pour objet l'utilisation des dispersions aqueuses comme liants de peintures à l'eau. Les peintures à l'eau connaissent un essor récent dû notamment à leur mise en oeuvre aisée (installations légères ne nécessitant pas de système d'élimination des solvants, nettoyage du matériel facile) ainsi qu'une prise de conscience collective des problèmes de pollution de l'environnement. Si les constituants de base des peintures tels que les polymères fluorés et les polymères acryliques sont souvent solubles dans des solvants organiques de type ester ou cétone, ils ne sont en général pas ou très peu solubles dans l'eau. On a donc cherché à emulsifier ou disperser ces constituants essentiels des peintures de manière à pouvoir les utiliser en phase aqueuse.

Outre les dispersions selon l'invention, les liants de peinture en phase aqueuse comprennent un ou plusieurs agents durcisseurs qui sont en général des résines porteuses de groupements fonctionnels susceptibles de réagir chimiquement avec les groupements hydroxyles des copolymères dispersés. Parmi les agents durcisseurs utilisables

dans le cadre de l'invention, on peut citer les résines de polyisocyanates bloqués ou libres, ces derniers devant subir un traitement préalable permettant leur émulsification dans l'eau, les résines de mélamine/formol ou d'urée/formol.

Les peintures peuvent également contenir un ou plusieurs pigments qui peuvent être de type minéral ou organique. On préfère en général utiliser des pigments minéraux parmi lesquels on peut citer le dioxyde de titane, les oxydes de fer, de chrome, les oxydes mixtes de cobalt et d'aluminium, le noir de carbone, l'orangé de molybdate, les pigments inhibiteurs de corrosion tels que le phosphate de zinc, les pigments métalliques tels que l'aluminium.

Les peintures aqueuses peuvent également contenir une quantité faible de solvant du ou des copolymères fluorés hydroxylés et ce, afin d'en améliorer la filmification. A titre d'exemple, on peut citer les alcools, les éthers, les éthers de glycol ou de propylène glycol.

On peut également ajouter à la peinture tout adjuvant ou additif habituel des vernis et peintures tel que agents dispersants, agents épaississants de type associatif ou non, agents destinés à favoriser l'étalement, agents modifiants la rhéologie, agents stabilisants à la chaleur et/ou aux UV, anti-oxydants, agents anti-mousses, agents mouillants des pigments et/ou des supports, fongicides, bactéricides, antigels et des catalyseurs de la réaction de durcissemnt de la peinture.

La peinture est préparée de façon connue en soi par mélange des différents constituants. On procède en général à la dispersion dans l'eau du ou des pigments en présence éventuelle de dispersant(s) puis au mélange à grande vitesse jusqu'à l'obtention d'une dispersion ayant la finesse requise. On peut opérer dans un appareil de type disperseur où l'on soumet les liquides à mélanger à un cisaillement important dû à l'agitation intense (appareil ULTRA-TURRAX®). On peut aussi obtenir un cisaillement par pompage du mélange des liquides à disperser au travers de buses calibrées (appareil MANTON-GAULIN®). On peut également disperser les liquides de façon efficace dans une cuve à ultra-sons de fréquence élevée. On peut aussi citer des disperseurs électriques où l'on fait passer l'une des phases à disperser au travers d'un capillaire placé dans un champ électrique qui le disperse sous forme de fines gouttelettes. On introduit alors sous agitation le ou les additifs énumérés plus haut puis la dispersion stable aqueuse. Selon la nature du durcisseur, il est ajouté soit en fin de mélange, soit immédiatement avant usage de la peinture. Lorsque le durcisseur - par exemple un polyisocyanate- est introduit en fin de mélange, on préfère le disperser préalablement dans l'eau avant son introduction dans le mélange afin de lui assurer une meilleure répartition ultérieure au sein du mélange. On améliore encore la prédispersion du durcisseur en le diluant au préalable dans un solvant de manière à diminuer la viscosité et favoriser l'émulsification. Parmi les solvants utilisables, on peut citer les esters, les étheresters, les composés aromatiques. Les solvants de faible solubilité sont préférés car ils sont en général moins susceptibles de déstabiliser l'émulsion de copolymères fluorés. Par solvant de faible solubilité dans l'eau, on entend les solvants dont la solubilité dans l'eau est inférieure à 30 % en poids.

Les peintures selon l'invention peuvent être appliquées sur les substrats à revêtir selon toute technique connue telle que pistolet pneumatique, électrostatique, brosse, rouleau, au rideau, au trempé ou par électrodéposition.

Les substrats à revêtir peuvent être des métaux (acier, acier galvanisé, aluminium), les matières plastiques telles que le PVC, les polyesters, les résines phénoliques, le verre, les matières céramiques, le bois, le béton, lesdits substrats pouvant être revêtus ou non de primaire et/ou subir un traitement de surface destiné à favoriser l'adhésion de la peinture.

Dans tous les exemples, les extraits secs (ES) sont exprimés en % en poids.

## <u>EXEMPLES 1 A 11</u>

**Fabrication des dispersions aqueuses contenant des copolymères fluorés hydroxyles**

| | |
|---|---|
| Solution aqueuse : | 150 g d'eau déionisée contenant |
| | 0,75 g d'émulsifiant |
| Solution de copolymère : | 315 g de solution du copolymère Ai ou Cj à |
| | 23,8 % d'extrait sec dans le solvant organique. |

Les caractéristiques des copolymères Ai et Cj sont indiquées ci-après.

Dans un becher de 1l, on introduit la solution aqueuse d'émulsifiant. Cette solution est agitée avec un disperseur ULTRA-TURRAX® pendant quelques secondes. On introduit ensuite la solution de copolymère pendant 5 minutes à vitesse d'agitation moyenne 6000 trs/min. On continue d'agiter encore 1 minute à 10 000 trs/min. puis on arrête l'agitation.

La dispersion est transférée dans un réacteur agité de 1l dans lequel on élimine le solvant par distillation sous vide à $T \leq 50$ °C.

Il ne se forme aucun dépôt ou croûte pendant cette opération pour les copolymères Ai..

La dispersion est vidangée. On calcule l'extrait sec (ES) de la dispersion aqueuse, la taille des particules (diamètre moyen) et mesure le dépôt formé après 1 mois de stockage (on remet sous agitation légère puis on laisse à nouveau

décanter).

| Copolymères de départ Ai et Cj | | compositions molaires■ |
|---|---|---|
| Selon l'invention Ai | | |
| A1 | $VF2/C_2F_4/CH_2$=CH-$CH_2$-O-$CH_2$-CHOH-$CH_2$OH | 65/35/10 |
| A2 | $VF2/C_2F_4/CH_2$=CH-$CH_2$-O-$(CH_2)_4$-0H | 65/35/10 |
| A3 | $VF3/C_2F_4/CH_2$=CH-$CH_2$-O-$CH_2$-CHOH-$CH_2$OH | 50/50/10 |
| A4 | $VF2/C_2F_4/CH_2$=CH-$CH_2$-O-CO-$C_6H_{10}$-COOH/$CH_2$=CH-$CH_2$-O-$CH_2$-CHOH-$CH_2$OH | 50/50/2/10 |
| A5 | $VF2/C_2F_4/C_3F_6/CH_2$=CH-$CH_2$-O-$CH_2$-CHOH-$CH_2$OH | 65/35/7/10 |
| Comparatifs Cj | | |
| C1 | $VF2/C_2F_4/C_3F_6$ | 78/22/7,5 |
| C2 | $VF2/C_2F_4/CH_2$=CH-O-$C_4H_9$ | 65/35/10 |
| C3 | $VF2/C_2F_4/CH_2$=CH-$CH_2$-O-CO-$C_6H_{10}$-COOH | 65/35/10 |

■ Les proportions molaires des monomères autres que VF2 et $C_2F_4$ sont iindiquées par rapport à 100 moles de VF2 + $C_2F_4$.

## TABLEAU 1

| Exemple | Copolymère | Solvant | émulsifiant % par rapport au copolymère Ai | ES % dispersion | taille particule nm | stabilite de la dispersion Taux dépôt % |
|---|---|---|---|---|---|---|
| 1 | A1 | acétate de méthyle | $C_6F_{13}C_2H_4SO_3K$ 1% | 33 | 300 | 0 |
| 2 | A4 | acétate de méthyle | $C_8F_{17}C_2H_4$ SO3K 1 % | 30 | 320 | 3 |
| 3 | A3 | acétate de méthyle | " | 33 | 300 | 3 |
| 4 | A4 | acétate de méthyle | " | 30 | 320 | 5 |
| 5 | A5 | acétate d'isopropyle | " | 30 | 350 | 10 |
| 6 | A4 | acétate de méthyle | $C_6F_{13}COO NH_4$1% | 30 | 350 | 15 |

| Exemple | Copolymère | Solvant | émulsifiant % par rapport au copolymère Ai | ES % dispersion | taille particule nm | stabilite de la dispersion Taux dépôt % |
|---|---|---|---|---|---|---|
| 7 | A4 | acétate de méthyle | docécyl benzène sulfonate de Na 1% | 30 | 350 | 20 |
| 8 | A1 | acéto nitrile | $C_8F_{17}C_2H_4$ $S0_3K$ 1 % | 2 % •✪ | | 90 % ✪ |
| 9 | C1 | acétate de méthyle | $C_8F_{17}C_2H_4$ $S0_3K$ 1 % | 1 % ✪ | | 95 % ✪ |
| 10 | C2 | acétate de méthyle | $C_8F_{17}C_2H_4$ $S0_3K$ 1 % | 2 % ✪ | | 90 % ✪ |
| 11 | C3 | acétate de méthyle | C8F17C2H4 S03K 1 % | 5 % | non mesurable | 80 %✪ |

✪ La décantation est très rapide, les dépôts ne sont pas redispersables ; étant donné que la formation des dépôts est importante, l'extrait sec de la dispersion après 24 heures de sédimentation est faible.

Selon l'enseignement de EP 212.508, EP 281.991, EP 320156 et EP 508.229, on a également préparé une solution à 50 % en poids dans l'acétone d'un copolymère A' contenant des motifs VF2/$C_2F_4$/$CH_2$=CH-$CH_2$-O-CO-$C_6H_{10}$-COOH/ $CH_2$=CH-$CH_2$-O-$CH_2$-CHOH-$CH_2$OH dans les proportions molaires 65/35/4/10 de Mn=9.000 et de Mw=18.500 neutralisée à 100 % avec de la triéthylamine. On ajoute de l'eau déionisée jusqu'à ce que l'extrait sec soit de 20 % puis élimine l'acétone sous vide à 40 °C. On constate que la dispersion perd sa stabilité : il se forme une masse de polymère non redispersable dans l'eau.

**Dispersions aqueuses contenant des copolymères fluorés hydroxylés et des copolymères acryliques.**

Copolymères fluorés de départ. : Ai

Préparation des copolymères acryliques ACRYL k

ACRYL 1 Copolymère MAM/ABu/HEA
fait en solution dans l'acétate de méthyle sans le copolymère fluoré.

Dans un ballon de 2 l muni d'une double enveloppe, d'une agitation et d'un condenseur, on introduit 350 g d'acétate de méthyle et 2,5 g de peroxydicarbonate de cyclohexyle.

Après déaération, on porte la température à 50 °C et introduit le mélange de monomères acryliques suivants :

| | |
|---|---|
| méthacrylate de méthyle | 75 g |
| acrylate de butyle | 75 g |
| acrylate d'hydroxyéthyle | 4,5 g |

Le mélange est coulé en 1 heure et la polymérisation est ensuite poursuivie encore 3 heures.

On récupère une solution de copolymère acrylique à 27 % d'extrait sec dans l'acétate de butyle.

La composition pondérale du copolymère MAM/ABu/HEA est 48,5/48,5/3

ACRYL 2 Copolymère MAM/ABu/AMPS
fait dans l'acétate de méthyle

Dans un réacteur de 2 l muni d'une double enveloppe, d'une agitation, d'un condenseur, on introduit 300 g d'acétate de méthyle, 65 g de méthacrylate de méthyle, 65 g d'acrylate de butyle et une solution constituée de 20 g d'AMPS neutralisée par 9,76 g de triéthylamine dans 60 g d'acétate de méthyle. Après déaération, on porte la température à 50°C et ajoute 2,5 g de peroxydicarbonate de cyclohexyle. La polymérisation est maintenue 4h à 50°C. On récupère 503 g de solution à 30,9 % d'extrait sec.

La composition pondérale du copolymère MAM/ABu/AMPS est 43,3/43,3/13,4.

ACRYL 3 Copolymère MAM/ABu/HEA/MADAME 67,5/67,5/5/10
fait dans l'acétate de méthyle

Dans un réacteur de 2 l muni d'une double enveloppe, d'une agitation, d'un condenseur, on introduit 365 g d'acétate d'isopropyle, 2,5 g d'azobisisobutyronitrile.

Après déaération, on porte la température à 70°C et introduit le mélange de monomères suivants :

| | |
|---|---|
| méthacrylate de méthyle | 67,5 g |
| acrylate de butyle | 67,5 g |
| acrylate d'hydroxyéthyle | 5 g |
| MADAME | 10 g |

Le mélange est coulé en 1h et la polymérisation est encore poursuivie pendant 3h.

On récupère une solution de copolymère acrylique à 29,4% d'extrait sec.

La composition pondérale du copolymère acrylique MAM/ABu/HEA/MADAME est 45/45/3,3/6,7.

**Solution de copolymère fluoré et de copolymère et acrylique**

Préparation du copolymère acrylique en présence du copolymère fluoré

Dans un ballon de 2l muni d'un agitateur, d'une double enveloppe, d'un condenseur, on introduit 600 g de solution de copolymère A1 à 25% d'extrait sec dans l'acétate de méthyle, ainsi que 1,8 g de peroxydicarbonate de cyclohexyle. Après élimination de l'oxygène de l'air, la température est portée à 50°C. A cette température, on commence à introduire le mélange de monomères acryliques suivants :

| | |
|---|---|
| méthacrylate de méthyle | 23,7g |
| acrylate de butyle | 23,7g |
| acrylate d'hydroxyéthyle | 1,5g |
| diméthylacrylamide | 1 g |

Ce mélange est introduit régulièrement en 1 heure.

Après 3h de polymérisation à 50°C, le réacteur est refroidi. La solution vidangée F/A1 est alors prête à être dispersée.

L'extrait sec est de 30,7 %

Le rapport copolymère fluoré/copolymère acrylique est de 25 %.

La composition pondérale du copolymère acrylique MAM/ABu/HEA/DMA est 47,5/47,5/3/2.

Préparation de solution contenant le copolymère acrylique et le copolymère fluoré par mélange (solutions F/A2 à F/A6)

On mélange simplement le copolymère fluoré à 25 % d'extrait sec et le copolymère acrylique ACRYL k (k=1 à 3) de manière à avoir des taux de copolymère acrylique de l'ordre de 30 % en poids. Les détails figurent dans le tableau 2.

Tableau 2

| N° | Copolymère fluoré | | | solvant acétate de | copo acryliques | | | $\frac{\text{\% Copo acrylique}}{\text{copos(acrylique+fluore)}}$ | ES % de la dispersion |
|---|---|---|---|---|---|---|---|---|---|
| | Réf. | ES % | poids (g) | | Réf. | ES % | poids (g) | | |
| F/A 2 | A1 | 25 | 300 | méthyle | ACRYL 1 | 27% | 118,5 | 30 | 25,6 |
| F/A 3 | A4 | 25 | 300 | méthyle | ACRYL 1 | 27 % | 118,5 | 30 | 25,6 |
| F/A 4 | A1 | 25 | 300 | méthyle | ACRYL 2 | 30,9 % | 103,5 | 30 | 26,5 |
| F/A 5 | A1 | 25 | 300 | isopropyle | ACRYL 3 | 29,4 % | 109 | 30 | 26,2 |
| F/A 6 | A3 | 25 | 300 | méthyle | ACRYL 1 | 27, % | 118,5 | 30 | 25,6 |

**EXEMPLES 12 A 17**

**Dispersions aqueuses contenant des copolymères fluorés et des copolymères acryliques.**

Selon la procédure décrite dans les exemples 1 à 11, 315 g de solution de copolymère fluoré et de copolymère acrylique sont dispersés avec le disperseur avec de l'eau déisonisée contenant 0,75 g d'émulsifiant de formule $C_nF_{2n+1}C_2H_4SO_3K$ (n = 4 à 10) ; on élimine ensuite le solvant acétate par distillation sous vide.

Tableau 3

| exemple N° | solvant | eau | réf. solution | ES % dispersion aqueuse | taille des particules nm | stabilité dispersion taux de dépôt %/ copo sec |
|---|---|---|---|---|---|---|
| 12 | acétate de méthyle | 150 g | sol F/A 1 | 37 % | 300 | stable 2 % |
| 13 | acétate de méthyle | 150 g | Sol F/A 2 | 41 % | 290 | stable 1 % |
| 14 | acétate de méthyle | 150 g | sol F/A 3 | 35 % | 320 | stable 2 % |
| 15 | acétate de méthyle | 225 g | sol F/A 4 | 31 % | 250 | très stable 0% |
| 16 | acétate d'isopropyle | 225 g | Sol F/A 5 | 30 % | 310 | stable 5 % |
| 17 | acétate de méthyle | 150 g | sol F/A 6 | 39 % | 300 | stable 2 % |

**Exemples 18 à 26 Peintures en phase aqueuse.**

Exemple 18

On prépare un vernis de la manière suivante :
Dans un becher de 1l on introduit

* 2,4 g d'un alkylpolyalcoxyéther modifié en milieu paraffinique① (viscosité 200 mPa.s)
* O,7 g d'une solution de NN'-dihydroxyméthylurée, 1,6 dihydroxy-2,5 dioxohexane et d'un dérivé d'isothiazonilone ②
* 10 g d'acétate de butyldiglycol,
* 500 g de l'émulsion de copolymère fluoré de l'exemple 1

et on mélange à 500 trs/min pendant 1 minute.

On prépare séparément dans un becher de 500 ml la prédispersion de l'isocyanate en introduisant successivement :

- 100 g d'un polyisocyanate aliphatique hydrophile à base de diisocyanate d'hexaméthylène③ (teneur en NCO libres : 17,2 %, viscosité à 23° C : 3 500 mPa.s)
- 122,2 g d'eau.

On turbine à 500 trs/min pendant 1 minute.

On introduit ensuite 178,9 g de cette prédispersion d'isocyanate dans l'émulsion précédente et on agite à 500 trs/min pendant 1 minute pour obtenir le vernis.

Ce vernis est appliqué au raclet spirale de 100 µm sur une plaque d'aluminium chromaté préalablement dégraissée puis étuvée pendant 30 minutes à 80°C pour donner un film d'épaisseur sèche de 16 µm.

La dureté Persoz mesurée selon la norme NFT 30-016 est de 220 s.

Le brillant spéculaire à 60° mesuré selon ASTM D 523-85 est de 65 %.

L'adhérence évaluée selon la norme NFT 30-038 est de classe 1.

La résistance à la méthyl éthyl cétone est supérieure à 100 aller-retours.

Pour juger du degré de réticulation du film, on le soumet à une série de frottements avec un coton imbibé de méthyl éthyl cétone jusqu'à apparition du support. Un nombre d'aller-retours inférieur à 50 traduit une mauvaise réticulation, un nombre supérieur à 100 traduit une excellente réticulation.

Exemple 19

On prépare une peinture blanche de la manière suivante :

Dans un becher de 1 l, on introduit 90 g d'eau et 1,8 g d'un polyacrylate de sodium④, on mélange puis ajoute 171,9 g de dioxyde de titane.

On disperse à 2 000 trs/min pendant 15 minutes jusqu'à l'obtention d'une finesse inférieure à 10 µm.

On introduit ensuite :

* 3g d'un alkylpolyalcoxyéther modifié en milieu paraffinique① (viscosité 200 mPa.s)
* 0,8 g d'une solution de NN'-dihydroxyméthylurée, 1,6 dihydroxy-2,5 dioxohexane et d'un dérivé d'isothiazonilone②,
* 10 g de d'acétate de butyl diglycol,
* 500 g de l'émulsion de copolymère fluoré de l'exemple 1

et on mélange à 500 trs/min pendant 2 minutes pour obtenir une émulsion fluorée pigmentée.

On prépare séparément dans un becher de 500 ml la prédispersion de l'isocyanate en introduisant successivement :

- 100 g d'un polyisocyanate aliphatique hydrophile à base de diisocyanate d'hexaméthylène③ (teneur en NCO libres : 17,2 %, viscosité à 23°C : 3 500 mPa.s)
- 30 g d'acétate de méthoxypropyle
- 92,2 g d'eau

On turbine à 500 trs/min pendant 1 minute.

On introduit ensuite 178,9 g de cette prédispersion d'isocyanate dans l'émulsion fluorée pigmentée et on agite à 500 trs/min pendant 1 minute pour obtenir la peinture. Cette peinture est appliquée au raclet spirale de 120 µm sur une plaque d'aluminium chromaté préalablement dégraissée puis étuvée pendant 30 minutes à 80°C pour donner un film d'épaisseur sèche de 18 µm.

La dureté Persoz mesurée selon la norme NFT 30-016 est de 220 s.

Le brillant spéculaire à 60° mesuré selon le norme ASTM D 523-85 est de 30 %.

La résistance à la méthyl éthyl cétone est supérieure à 100 aller-retours.

L'adhérence évaluée selon la norme NFT 30-038 est de classe 0.

Exemple 20

On prépare une peinture blanche de la manière suivante :

Dans un becher de 1 l on introduit 80 g d'eau et 1,6 g d'un polyacrylate de sodium④, on mélange puis ajoute 150 g de dioxyde de titane.

On disperse à 2000 trs/min pendant 15 minutes jusqu'à l'obtention d'une finesse inférieure à 10 µm.

On introduit ensuite :

* 2,8 g d'un alkylpolyalcoxyéther modifié en milieu paraffinique① (viscosité 200 mPa.s)
* 0,7 g d'une solution de NN'-dihydroxyméthylurée, 1,6 dihydroxy-2,5 dioxohexane et d'un dérivé d'isothiazonilone②,
* 10 g d'acétate de butyl diglycol,
* 500 g de l'émulsion de copolymère fluoré de l'exemple 2

et on mélange à 500 trs/min pendant 2 minutes pour obtenir une émulsion fluorée pigmentée.

On prépare séparément dans un becher de 500 ml la prédispersion de l'isocyanate en introduisant successivement :

- 100 g d'un polyisocyanate aliphatique hydrophile à base de diisocyanate d'hexaméthylène③ (teneur en NCO libres 17,2 %, viscosité à 23°C : 3 500 mPa.s)
- 30 g d'acétate de méthoxypropyle
- 92,2 g d'eau.

On turbine à 500 trs/min pendant 1 minute.

On introduit ensuite 143,1 g de cette prédispersion d'isocyanate dans l'émulsion fluorée pigmentée et on agite à 500 trs/min pendant 1 minute pour obtenir la peinture.

Cette peinture est appliquée au raclet spirale de 120 µm sur une plaque d'acier galvanisé d'épaisseur 0,8 mm préalablement dégraissée et recouverte d'un primaire de type époxy puis étuvée pendant 15 minutes à 180°C pour donner un film d'épaisseur sèche de 17 µm.

La dureté Persoz mesurée selon la norme NFT 30-016 est de 245s.

Le brillant spéculaire à 60° mesuré selon la norme ASTM D 523-85 est de 38 %.

La résistance à la méthyl éthyl cétone est supérieure à 100 aller-retours.

L'adhérence évaluée selon la norme NFT 30-038 est de classe 0.

Exemple 21

On prépare un vernis de la manière suivante :

Dans un becher de 1l on introduit :

* 2,5 g d'un alkylpolyalcoxyéther modifié en milieu paraffinique① (viscosité 200 mPa.s)
* 0,7 g d'une solution de NN'-dihydroxyméthylurée, 1,6 dihydroxy-2,5 dioxohexane et d'un dérivé d'isothiazonilone②,
* 10 g d'acétate de butyl diglycol,
* 500 g de l'émulsion de copolymère fluoré de l'exemple 12

et on mélange à 500 trs/min pendant 1 minute.

On prépare séparément dans un becher de 500 ml la prédispersion de l'isocyanate en introduisant successivement :

- 100 g d'un polyisocyanate aliphatique hydrophile à base de diisocyanate d'hexaméthylène ③ (teneur en NCO libres : 17,2 %, viscosité à 23°C : 3 500 mPa.s)
- 122,2 g d'eau

On turbine à 500 trs/min pendant 1 minute.

On introduit ensuite 149,6 g de cette prédispersion d'isocyanate dans l'émulsion précédente et on agite à 500 trs/min pendant 1 minute pour obtenir le vernis.

Ce vernis est appliqué au raclet spirale de 100 µm sur une plaque d'aluminium chromaté préalablement dégraissée puis étuvée pendant 30 minutes à 80°C pour donner un film d'épaisseur sèche de 18 µm.

La dureté Persoz mesurée selon la norme NFT 30-016 est de 260 s.

Le brillant spéculaire à 60° mesuré selon la norme ASTM D 523-85 est de 60 %.

La résistance à la méthyl éthyl cétone est supérieure à 100 aller-retours.
L'adhérence évaluée selon la norme NFT 30-038 est de classe 0.

Exemple 22

On prépare une peinture blanche de la manière suivante :
Dans un becher de 1l on introduit 100 g d'eau et 1,9 g d'un polyacrylate de sodium④, on mélange puis on ajoute 194,6 g de dioxyde de titane.
On disperse à 2 000 trs/min pendant 15 minutes jusqu'à l'obtention d'une finesse inférieure à 10 µm.
On introduit ensuite :

* 2,5 g d'un alkylpolyalcoxyéther modifié en milieu paraffinique① (viscosité 200 mPa.s),
* O,7 g d'une solution de NN'-dihydroxyméthylurée, 1,6 dihydroxy-2,5 dioxohexane et d'un dérivé d'isothiazonilone ②,
* 10 g d'acétate de butyl diglycol,
* 500 g de l'émulsion de copolymère fluoré de l'exemple 13

et on mélange à 500 trs/min pendant 2 minutes pour obtenir une émulsion fluorée pigmentée.
On prépare séparément dans un becher de 500 ml la prédispersion de l'isocyanate en introduisant successivement :

- 100 g d'un polyisocyanate aliphatique hydrophile à base de diisocyanate d'hexamethylène③ (teneur en NCO libres 17,2 %, viscosité à 23°C : 3 500 mPa.s)
- 30 g d'acétate de méthoxypropyle
- 92,2 g d'eau.

On turbine à 500 trs/min pendant 1 minute.
On introduit ensuite 162,3 g de cette prédispersion d'isocyanate dans l'émulsion fluorée pigmentée et on agite à 500 trs/min pendant 1 minute pour obtenir la peinture. Cette peinture est appliquée au raclet spirale de 100 µm sur une plaque d'aluminium chromaté préalablement dégraissée puis étuvée pendant 40 minutes à 80°C pour donner un film d'épaisseur sèche de 20 µm.
La dureté Persoz mesurée selon la norme NFT 30-016 est de 235s.
Le brillant spéculaire à 60° mesuré selon la norme ASTM D 523-85 est de 39 %.
La résistance à la méthyl éthyl cétone est supérieure à 100 aller-retours.
L'adhérence évaluée selon la norme NFT 30-038 est de classe 0.

Exemple 23

On prépare une peinture blanche de la manière suivante :
Dans un becher de 1l on introduit 75 g d'eau et 1,6 g d'un polyacrylate de sodium④, on mélange puis on ajoute 141,5 g de dioxyde de titane.
On disperse à 2 000 trs/min pendant 15 minutes jusqu'à l'obtention d'une finesse inférieure à 10 µm.
On introduit ensuite :

* 2,8 g d'un alkylpolyalcoxyéther modifié en milieu paraffinique① (viscosité 200 mPa.s),
* O,7 g d'une solution de NN'-dihydroxyméthylurée, 1,6 dihydroxy-2,5 dioxohexane et d'un dérivé d'isothiazonilone ②,
* 10 g d'acétate de butyl diglycol,
* 500 g de l'émulsion de copolymère fluoré de l'exemple 15

et on mélange à 500 trs/min pendant 2 minutes pour obtenir une émulsion fluorée pigmentée.
On prépare séparément dans un becher de 500 ml la prédispersion de l'isocyanate en introduisant successivement :

- 100 g d'un polyisocyanate aliphatique hydrophile à base de diisocyanate d'hexamethylène③ (teneur en NCO libres 17,2 %, viscosité à 23°C : 3 500 mPa.s)
- 30 g d'acétate de méthoxypropyle
- 92,2 g d'eau.

On turbine à 500 trs/min pendant 1 minute.

On introduit ensuite 104,7 g de cette prédispersion d'isocyanate dans l'émulsion fluorée pigmentée et on agite à 500 trs/min pendant 1 minute pour obtenir la peinture. Cette peinture est appliquée au raclet spirale de 120 µm sur une plaque d'aluminium chromaté prélablement dégraissée puis étuvée pendant 30 minutes à 80°C pour donner un film d'épaisseur sèche de 20 µm.

La dureté Persoz mesurée selon la norme NFT 30-016 est de 200 s.

Le brillant spéculaire à 60° mesuré selon la norme ASTM D 523-85 est de 28 %.

La résistance à la méthyl éthyl cétone est supérieure à 100 aller-retours.

L'adhérence évaluée selon la norme NFT 30-038 est de classe 0.

Exemple 24

On prépare une peinture blanche de la manière suivante :

Dans un becher de 1l on introduit 75 g d'eau et 1,6 g d'un polyacrylate de sodium④, on mélange puis on ajoute 142,7 g de dioxyde de titane.

On disperse à 2 000 trs/min pendant 15 minutes jusqu'à l'obtention d'une finesse inférieure à 10 µm.

On introduit ensuite :

* 2,8 g d'un alkylpolyalcoxyéther modifié en milieu paraffinique① (viscosité 200 mPa.s),
* O,7 g d'une solution de NN'-dihydroxyméthylurée, 1,6 dihydroxy-2,5 dioxohexane et d'un dérivé d'isothiazonilone ②,
* 9 g d'acétate de butyl diglycol,
* 500 g de l'émulsion de copolymère fluoré de l'exemple 13

et on mélange à 500 trs/min pendant 2 minutes pour obtenir une émulsion fluorée pigmentée.

On prépare séparément dans un becher de 500 ml la prédispersion de l'isocyanate en introduisant successivement :

- 100 g d'un polyisocyanate aliphatique hydrophile à base de diisocyanate d'hexamethylène③ (teneur en NCO libres 17,2 %, viscosité à 23°C : 3 500 mPa.s)
- 20 g de diacétate de propylène glycol
- 102,2 g d'eau.

On turbine à 500 trs/min pendant 1 minute.

On introduit ensuite 119,6 g de cette prédispersion d'isocyanate dans l'émulsion fluorée pigmentée et on agite à 500 trs/min pendant 1 minute pour obtenir la peinture. Cette peinture est appliquée au raclet spirale de 120 µm sur une plaque d'aluminium chromaté prélablement dégraissée puis étuvée pendant 30 minutes à 120°C pour donner un film d'épaisseur sèche de 18 µm.

La dureté Persoz mesurée selon la norme NFT 30-016 est de 230 s.

Le brillant spéculaire à 60° mesuré selon la norme ASTM D 523-85 est de 33 %.

La résistance à la méthyl éthyl cétone est supérieure à 100 aller-retours.

L'adhérence évaluée selon la norme NFT 30-038 est de classe 0.

Exemple 25

On prépare un vernis de la manière suivante:

Dans un bécher de 1 l, on introduit 500 g de copolymère fluoré de l'exemple 1 auquel on ajoute 210 g d'une solution d'alkylphénoloxyéthyléné⑤ à 10% dans l'eau.

On mélange à 500 trs/min pendant 1 minute.

On ajoute à cette dispersion 12 g d'un épaississant associatif de type polyuréthanne que l'on turbine à 500 trs/min pendant 1minute, puis 47,5 g d'un polyisocyanate aliphatique hydrophile à base de diisocyanate d'héxaméthylène ③ (teneur en NCO libres: 17,2%, viscosité à 23 °C: 3.500 mPa.s) sont introduits goutte à goutte dans la dispersion sous agitation à 1.000 trs/min pendant 1 minute pour obtenir le vernis.

Ce vernis est appliqué au raclet spirale de 100 µm sur une plaque d'aluminium chromaté préalablement dégraissée puis étuvée pendant 1 heure à 80°C pour donner un film d'épaisseur sèche de 20 µm.

La dureté Persoz mesurée selon la norme NFT 30-016 est de 215 s.

Le brillant spéculaire à 60° mesuré selon ASTM D 523-85 est de 70 %.

L'adhérence évaluée selon la norme NFT 30-038 est de classe 1.

La résistance à la méthyle-éthyle cétone est supérieure à 200 allers-retours.

Exemple 26

On prépare une peinture de la manière suivante :

Dans un bécher de 1 l, on introduit 280 g d'eau et 0,69 g d'un polyacrylate de sodium④que l'on mélange puis on ajoute 138,25 g de dioxyde de titane.

On disperse à 2.000 trs/min pendant 20 minutes jusqu'à obtention d'une finesse inférieure à 10 µm.

On introduit ensuite :

- 210 g d'une solution d'alkylphénoloxyéthyléné⑤à 10% dans l'eau.
- 3 g d'un copolymère de siloxane modifié①
- 0.8 g d'une solution de NN'-dihydroxyméthylurée, 1,6 dihydroxy-2,5 dioxohexane et d'un dérivé d'isothiazonilone②
- 500 g de la dispersion de copolymère de l'exemple 1,
- 12 g d'un épaississant associatif de type polyuréthanne.

On turbine à 500 trs/min pendant 2 minutes pour obtenir une émulsion fluorée pigmentée.

Puis 47,5 g d'un polyisocyanate aliphatique hydrophile à base de diisocyanate d'héxaméthylène③(teneur en NCO libres: 17,2%, viscosité à 23 °C: 3.500 mPa.s) sont introduits goutte à goutte dans la dispersion sous agitation à 1.000 trs/min pendant 1 minute pour obtenir la peinture.

Cette peinture est appliquée au raclet spirale de 100 µm sur une plaque d'aluminium chromaté préalablement dégraissée puis étuvée pendant 1 heure à 80°C pour donner un film d'épaisseur sèche de 30 µm.

La dureté Persoz mesurée selon la norme NFT 30-016 est de 200 s.

Le brillant spéculaire à 60° mesuré selon ASTM D 523-85 est de 40 %.

L'adhérence évaluée selon la norme NFT 30-038 est de classe 1.

La résistance à la méthyl-éthyle cétone est de 100 allers-retours.

①: agent anti-mousse
②: agent bactéricide
③: agent durcisseur
④: agent dispersant du pigment
⑤: tensio-actif

## Revendications

**1.** Dispersion aqueuse stable comprenant au moins un agent émulsifiant caractérisée en ce qu'elle comprend un ou plusieurs copolymères fluorés hydroxylés à base des monomères suivants :

1. de 45 à 95 % (molaire) de fluorure de vinylidène (VF2) et/ou de trifluoroéthylène (VF3),
2. de 5 à 55 % (molaire) de tétrafluoroéthylène ($C_2F_4$)
3. de 2 à 25 moles pour 100 moles de monomères 1+2 d'un ou plusieurs monomères allyliques hydroxylés choisis parmi l'alcool allylique et les éthers allyliques hydroxylés tels que

$$CH_2=CH-CH_2-O-CH_2-CHOH-CH_2-OH$$

$$CH_2=CH-CH_2-O-(CH_2)_n-OH \text{ avec } 3 \leq n \leq 8$$

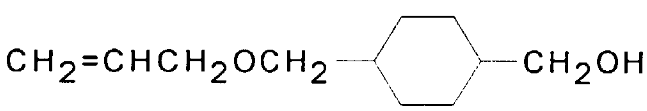

$$CH_2=CH-CH_2-O-(CH_2-CH_2-O)_n-H \text{ avec } 1 \leq n \leq 14$$

$$CH_2=CH\text{-}CH_2\text{-}O\text{-}(CH_2\text{-}CH(CH_3)\text{-}O)_n\text{-}H \text{ avec } 1 \leq n \leq 14$$

4. et de 0 à 10 moles pour 100 moles de monomères 1+2 d'un ou plusieurs monomères choisis parmi les éthers vinyliques non hydroxylés, tels que le butylvinyléther, d'autres monomères fluorés (i-e différents de VF2, VF3, $C_2F_4$) tels que $C_3F_6$, $C_2F_3Cl$, les éthers et esters allyliques non salifiés, éventuellement carboxylés et/ou substitués par $-(CF_2)_n-CF_3$ avec $4 \leq n \leq 10$tels que :

$$CH_2=CH\text{-}CH_2\text{-}O\text{-}CO\text{-}C_2H_4\text{-}COOH, \qquad CH_2=CH\text{-}CH_2\text{-}O\text{-}CO\text{-}C_6H_{10}\text{-}COOH$$

$$CH_2=CH\text{-}CH_2\text{-}O\text{-}C_2H_4\text{-}(CF_2)_nCF_3$$

$$CH_2=CH\text{-}CH_2\text{-}CO\text{-}O\text{-}C_2H_4\text{-}(CF_2)_nCF_3, \qquad CH_2=C(CH3)\text{-}CO\text{-}O\text{-}CH_2\text{-}CF_3$$

**2.** Dispersion aqueuse stable selon la revendication 1, caractérisée en ce qu'elle comprend un ou plusieurs copolymères acryliques à base des monomères suivants :

* de 40 à 70 % (massique) de méthacrylate de méthyle (MAM),
* de 30 à 60 % (massique) d'un ou plusieurs (méth)acrylate(s) d'alkyle, tels que l'acrylate de butyle, les (méth) acrylates d'éthyle,
* et de 0 à 15 % (massique) d'un ou plusieurs monomères (méth)acrylates d'alkyle fonctionnalisés ou substitués par exemple par des groupements hydroxyles, $CF_3-(CF_2)_n-$ avec $4 \leq n \leq 10$, le rapport pondéral du ou des copolymères acryliques à l'ensemble de(s) copolymère(s) fluoré(s) hydroxylé(s) et de(s) copolymère(s) acryliques(s) dans la dispersion stable aqueuse étant inférieur à 50 %, et de préférence compris entre 20 et 30 %.

**3.** Dispersion stable aqueuse selon la revendication 1 ou 2, caractérisée en ce que son extrait sec est au moins égal à 30 % en poids.

**4.** Procédé de fabrication des dispersions stables aqueuses selon les revendications 1 à 3, caractérisé en ce qu'on :

- prépare une solution de copolymère(s) fluoré(s) hydroxylé(s) éventuellement en présence du ou des copolymères acryliques dans un solvant organique,
- disperse la solution ainsi obtenue dans une solution aqueuse d'agent(s) émulsifiant(s),
- élimine le solvant organique soit simultanément par distillation, soit après la dispersion.

**5.** Procédé de fabrication des dispersions stables aqueuses selon la revendication 2 ou 3, caractérisé en ce qu'on :

- copolymérise les monomères acryliques en présence du ou des copolymères fluorés hydroxylés en solution ou en émulsion dans un solvant organique,
- disperse la solution ainsi obtenue dans une solution aqueuse d'agent(s) émulsifiant(s),
- élimine le solvant organique soit simultanément par distillation, soit après la dispersion.

**6.** Utilisation des dispersions stables aqueuses selon les revendications 1 à 3 pour la réalisation de peintures et vernis en phase aqueuse.

## Claims

**1.** Stable aqueous dispersion comprising at least one emulsifying agent, characterized in that it comprises one or a number of hydroxylated fluorinated copolymers based on the following monomers:

1. from 45 to 95% (molar) of vinylidene fluoride (VF2) and/or of trifluoroethylene (VF3),
2. from 5 to 55% (molar) of tetrafluoroethylene ($C_2F_4$)
3. from 2 to 25 mol, per 100 mol of monomers 1 + 2, of one or a number of hydroxylated allylic monomers chosen from allylic alcohol and hydroxylated allylic ethers such as

$CH_2=CH-CH_2-O-CH_2-CHOH-CH_2-OH$

$CH_2=CH-CH_2-O-(CH_2)_n-OH$ with $3 \le n \le 8$

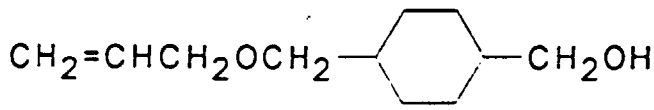

$CH_2=CH-CH_2-O-(CH_2-CH_2-O)_n-H$ with $1 \le n \le 14$

$CH_2=CH-CH_2-O-(CH_2-CH(CH_3)-O)_n-H$ with $1 \le n \le 14$

4. and from 0 to 10 mol, per 100 mol of monomers 1 + 2, of one or a number of monomers chosen from non-hydroxylated vinyl ethers, such as butyl vinyl ether, other fluorinated monomers (i.e. other than VF2, VF3 or $C_2F_4$), such as $C_3F_6$ or $C_2F_3Cl$, or non-salified allylic ethers and esters which are optionally carboxylated and/or substituted with $-(CF_2)_n-CF_3$ with $4 \le n \le 10$, such as:

$CH_2=CH-CH_2-O-CO-C_2H_4-COOH$,

$CH_2=CH-CH_2-O-CO-C_6H_{10}-COOH$

$CH_2=CH-CH_2-O-C_2H_4-(CF_2)_nCF_3$

$CH_2=CH-CH_2-CO-O-C_2H_4-(CF_2)_nCF_3$,

$CH_2=C(CH_3)-CO-O-CH_2-CF_3$

**2.** Stable aqueous dispersion according to Claim 1, characterized in that it comprises one or a number of acrylic copolymers based on the following monomers:

* from 40 to 70% (by mass) of methyl methacrylate (MMA),
* from 30 to 60% (by mass) of one or a number of alkyl (meth)acrylate(s), such as butyl acrylate or the ethyl (meth)acrylates,
* and from 0 to 15% (by mass) of one or a number of alkyl (meth)acrylate monomers which are functionalized or substituted, for example, with hydroxyl groups or $CF_3-(CF_2)_n-$ groups with $4 \le n \le 10$, the ratio by weight of the acrylic copolymer(s) to the combined hydroxylated fluorinated copolymer(s) and acrylic copolymer(s) in the stable aqueous dispersion being less than 50% and preferably between 20 and 30%.

**3.** Stable aqueous dispersion according to Claim 1 or 2, characterized in that its solids content is at least equal to 30% by weight.

**4.** Process for the manufacture of the stable aqueous dispersions according to Claims 1 to 3, characterized in that:

- a solution of hydroxylated fluorinated copolymer(s), optionally in the presence of the acrylic copolymer(s), in an organic solvent is prepared,
- the solution thus obtained is dispersed in an aqueous solution of emulsifying agent(s),
- the organic solvent is removed, either simultaneously by distillation or after dispersion.

**5.** Process for the manufacture of the stable aqueous dispersions according to Claim 2 or 3, characterized in that:

- the acrylic monomers are copolymerized in the presence of the hydroxylated fluorinated copolymer(s) in solution or in emulsion in an organic solvent,
- the solution thus obtained is dispersed in an aqueous solution of emulsifying agent(s),
- the organic solvent is removed, either simultaneously by distillation or after dispersion.

**6.** Use of the stable aqueous dispersions according to Claims 1 to 3 for the preparation of aqueous-phase paints and varnishes.

**Patentansprüche**

**1.** Stabile wäßrige Dispersion, enthaltend mindestens ein Emulgierungsmittel, dadurch gekennzeichnet, daß sie mindestens ein oder mehrere hydroxylierte Fluorcopolymere auf Basis der folgenden Monomere umfaßt:

1. 45 bis 95 Mol-% Vinylidenfluorid (VF2) und/oder Trifluorethylen (VF3);
2. 5 bis 55 Mol-% Tetrafluorethylen ($C_2F_4$);
3. 2 bis 25 Mol pro 100 Mol der Monomere 1+2 eines oder mehrerer hydroxylierter Allylmonomere, ausgewählt aus Allylalkohol und hydroxylierten Allylethern wie:

$$CH_2{=}CH\text{-}CH_2\text{-}O\text{-}CH_2\text{-}CHOH\text{-}CH_2\text{-}OH,$$

$$CH_2{=}CH\text{-}CH_2\text{-}O\text{-}(CH_2)_n\text{-}OH \text{ mit } 3 \le n \le 8,$$

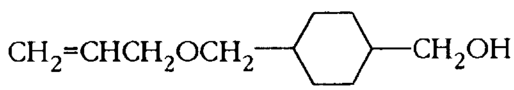 ,

$$CH_2{=}CH\text{-}CH_2\text{-}O\text{-}(CH_2\text{-}CH_2\text{-}O)_n\text{-}H \text{ mit } 1 \le n \le 14,$$

$$CH_2{=}CH\text{-}CH_2\text{-}O\text{-}(CH_2\text{-}CH(CH_3)\text{-}O)_n\text{-}H \text{ mit } 1 \le n \le 14;$$

4. 0 bis 10 Mol pro 100 Mol der Monomere 1+2 eines oder mehrerer Monomere, ausgewählt aus nichthydroxylierten Vinylethern wie Butylvinylether, weiteren fluorierten Monomeren (d.h. anders als VF2, VF3, $C_2F_4$) wie $C_3F_6$ und $C_2F_3Cl$ sowie nicht versalzten Allylethern und -estern, gegebenenfalls carboxyliert und/oder substituiert mit $-(CF_2)_n-CF_3$ mit $4 \le n \le 10$ wie:

$$CH_2{=}CH\text{-}CH_2\text{-}O\text{-}CO\text{-}C_2H_4\text{-}COOH,$$

$$CH_2{=}CH\text{-}CH_2\text{-}O\text{-}CO\text{-}C_6H_{10}\text{-}COOH,$$

$$CH_2{=}CH\text{-}CH_2\text{-}O\text{-}C_2H_4\text{-}(CF_2)_nCF_3,$$

$$CH_2{=}CH\text{-}CH_2\text{-}CO\text{-}O\text{-}C_2H_4\text{-}(CF_2)_nCF_3,$$

$$CH_2{=}C(CH_3)\text{-}CO\text{-}O\text{-}CH_2\text{-}CF_3.$$

**2.** Stabile wäßrige Dispersion nach Anspruch 1, dadurch gekennzeichnet, daß sie ein oder mehrere Acrylcopolymere

auf Basis der folgenden Monomere umfaßt:

- 40 bis 70 Masse-% Methylmethacrylat (MMA),
- 30 bis 60 Masse-% eines oder mehrerer Alkyl(meth-)acrylate wie Butylacrylat und Ethyl(meth-)acrylat und
- 0 bis 15 Masse-% eines oder mehrerer Alkyl(meth-)acrylatmonomere, die funktionalisiert oder substituiert sind, beispielsweise mit Hydroxylgruppen oder $CF_3$-$(CF_2)_n$-Gruppen mit $4 \leq n \leq 10$, wobei das Gewichtsverhältnis des oder der Acrylcopolymere zu der Gesamtheit aus hydroxylierten Fluorcopolymer(en) und Acrylcopolymer(en) in der stabilen wäßrigen Dispersion kleiner als 50 % ist und vorzugsweise zwischen 20 % und 30 % liegt.

**3.** Stabile wäßrige Dispersion nach Anspruch 1 oder 2, dadurch gekennzeichnet, daß ihr Trockenextrakt mindestens 30 Gew.-% beträgt.

**4.** Verfahren zur Herstellung von stabilen wäßrigen Dispersionen nach den Ansprüchen 1 bis 3, dadurch gekennzeichnet, daß

- man eine Lösung von einem oder mehreren hydroxylierten Fluorcopolymeren gegebenenfalls in Gegenwart eines oder mehrerer Acrylcopolymere in einem organischen Lösemittel herstellt,
- man die auf diese Weise erhaltene Lösung in einer wäßrigen Lösung eines oder mehrerer Emulgierungsmitteln dispergiert und
- man das organische Lösemittel entweder mittels Destillation gleichzeitig oder nach der Dispersion entfernt.

**5.** Verfahren zur Herstellung von stabilen wäßrigen Dispersionen nach Anspruch 2 oder 3, dadurch gekennzeichnet, daß:

- man die Acrylmonomere in Gegenwart des oder der hydroxylierten Fluorcopolymere in Lösung oder in Emulsion in einem organischen Lösemittel copolymerisiert,
- man die auf diese Weise erhaltene Lösung in einer wäßrigen Lösung eines oder mehrerer Emulgatoren dispergiert und
- man das organische Lösemittel entweder mittels Destillation gleichzeitig oder nach der Dispersion entfernt.

**6.** Verwendung von stabilen wäßrigen Dispersionen nach den Ansprüchen 1 bis 3 zur Herstellung von Farben und Lacken in wäßriger Phase.